**Europäisches Patentamt**

**European Patent Office**

**Office européen des brevets**

(19)

(11) Veröffentlichungsnummer: **0 191 807**
**B1**

(12) # EUROPÄISCHE PATENTSCHRIFT

(45) Veröffentlichungstag der Patentschrift:
15.02.89

(21) Anmeldenummer: 85903981.0

(22) Anmeldetag: 30.07.85

(86) Internationale Anmeldenummer:
PCT/DE 85/00257

(87) Internationale Veröffentlichungsnummer:
WO 86/01183 (27.02.86 Gazette 86/05)

(51) Int. Cl.⁴: **B 65 G 1/00,** B 65 H 15/02

(54) **VERFAHREN UND VORRICHTUNG ZUM UMPALETTIEREN.**

(30) Priorität: 10.08.84 DE 3429538

(43) Veröffentlichungstag der Anmeldung:
27.08.86 Patentblatt 86/35

(45) Bekanntmachung des Hinweises auf die Patenterteilung:
15.02.89 Patentblatt 89/7

(84) Benannte Vertragsstaaten:
AT BE CH FR GB LI NL SE

(56) Entgegenhaltungen:
DE-A-1 920 979
US-A-2 774 487
US-A-3 123 232
US-A-3 425 365

(73) Patentinhaber: SCHULZ, Jürgen, Rendsburger
Landstrasse 230, D-2300 Kiel 1 (DE)

(72) Erfinder: SCHULZ, Jürgen, Rendsburger
Landstrasse 230, D-2300 Kiel 1 (DE)

(74) Vertreter: Tönnies, Jan G., Dipl.- Ing.,
Niemannsweg 133, D-2300 Kiel 1 (DE)

## Beschreibung

Die Erfindung betrifft eine Vorrichtung zum Umpalettieren von auf einer ersten Palette befindlichem Gut auf eine zweite Palette nach dem Oberbegriff des Anspruchs 1.

Paletten, also Plattformen aus Holz, Metall oder Kunststoff, finden als Ladehilfsmittel für den Transport von Gütern mittels Fördermitteln, die mit Gabeln oder Teleskoparmen ausgerüstet sind, vielfältige Verwendung.

Dabei stellt sich das Problem, daß auf das eine Palette aufgebrachte Gut in manchen Fällen auf eine andere Palette umgesetzt werden muß. Dies gilt beispielsweise dann, wenn ein auf einer kostengünstigen Holzpalette transportiertes Gut in einen Bereich eingebracht werden muß, in dem aus hygienischen Gründen Holzpaletten nicht verwendbar sind, beispielsweise im Bereich der Lebensmittel- oder Arzneimittelindustrie, wo lediglich Aluminium- oder Edelstahlpaletten eingesetzt werden können. Ein Umpalettieren ist auch da erforderlich, wo die Güter von einer großen Palette auf mehrere kleine Paletten umgesetzt werden müssen, so etwa bei auf Paletten angebotenen Waren in Discountmärkten.

Eine Vorrichtung zum Umpalettieren der eingangs genannten Art ist aus der US-PS-3 123 232 bekannt. Bei dieser Vorrichtung wird die Palette mit dem darauf befindlichen Gut vor eine Seitenwand gefahren, mit einer Deckplatte belastet und dann in diesem belasteten Zustand mit der Seitenplatte gekippt.

Das Umpalettieren mit einer solchen Vorrichtung setzt zum einen das Aufbringen einer relativ hohen Kraft auf das Gut und zum anderen eine ausreichende Seitenstabilität des Gutes voraus, da ansonsten das seitliche Abfallen einzelner Teile des Gutes droht.

Der Erfindung liegt die Aufgabe zugrunde, eine Vorrichtung zum Umpalettieren zu schaffen, bei der ein seitliches Abfallen der Gegenstände des umzupalettierenden Gutes auch ohne eine Preßwirkung auf dieses ausgeschlossen ist.

Erfindungsgemäß wird diese Aufgabe durch eine Vorrichtung mit den im kennzeichnenden Teil des Anspruchs 1 angegebenen Merkmale gelöst. Die Ansprüche 2 bis 11 geben vorteilhafte Ausgestaltungen dieser Vorrichtung an, wobei auf der Grundplatte verschieb- und feststellbar geführte Anschläge und das Vorsehen einer relativ zu der Bodenplatte verschiebbare Deckplatte bereits aus der US-PS-3 123 232, die in ihrer Ebene bewegliche Lagerung wenigstens einer der Seitenplatte aus der DE-OS-1 912 110 und die Verwendung von Hydraulikzylindern zum Kippen einer Vorrichtung zum Umpalettieren an sich aus der DE-OS-2 843 578 bekannt sind.

Die Erfindung wird im folgenden anhand einer Zeichnung erläutert. In dieser zeigt:

Fig. 1  eine Draufsicht auf die Vorrichtung in ihrer Ausgangslage,

Fig. 2  eine Seitenansicht der Vorrichtung in der Ausgangslage, und

Fig. 3  eine Seitenansicht der Vorrichtung in gekippter Stellung.

Ein Rahmen trägt zwei Stützen 44, die an ihren oberen Enden mit Augen versehen sind, durch die jeweils ein Wellenstumpf 24, 26 geführt ist. Die Wellenstümpfe 24, 26 sind an schräg zu der Achse der Wellenstümpfe 24, 26 verlaufende, aufrechtstehende Seitenwände 14, 16 angeschweißt oder angeschraubt. Da die Wellenstümpfe 24, 26 in Lagern 20, 22 drehbar in den Augen der Stützen 44 gehalten sind, können die Seitenwände 14, 16 um eine durch die Wellenstümpfe 24, 26 definierte Drehachse 18 derart gekippt werden, daß die Schnittgerade der beiden Seitenplatten 14, 16 in der diese miteinander verbunden sind, sowie die Außenkanten der Seitenplatten 14, 16 aus der Vertikalen bis in die Horizontale oder auch darüber hinaus gelangen.

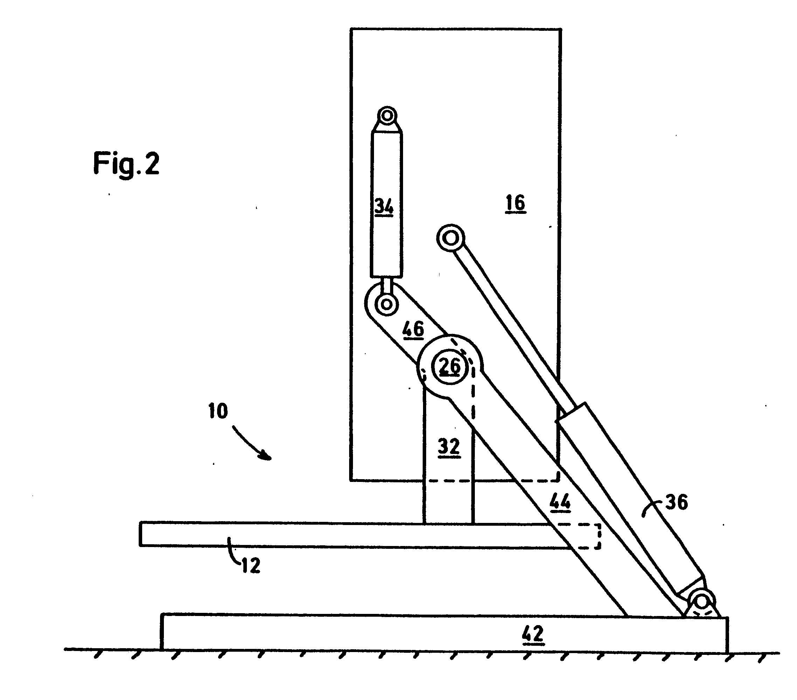

Figur 2 verdeutlicht, daß die Grundplatte 12 mit den Seitenplatten 14, 16 nicht fest verbunden ist, sondern über Arme 32, die in Lagern 28, 30 auf den Wellenstümpfen 24, 26 angeordnet sind, um die Kippachse 18 drehbar gelagert ist.

Figur 2 zeigt weiter einen Hydraulikzylinder 36, der an dem Rahmen 42 und der Seitenplatte 16 angelenkt ist. Ein entsprechender weiterer Hydraulikzylinder kann auf der anderen Seite an der Seitenplatte 14 angelenkt sein, es ist jedoch auch möglich, daß lediglich ein Hydraulikzylinder vorgesehen ist, der in der Verbindungslinie zwischen den Seitenplatten 14 und 16 angelenkt ist.

Figur 2 zeigt auch einen weiteren Hydraulikzylinder 34, der einerseits an dem Seitenblech 16 und andererseits an einer Nase 46 des Armes 32 angelenkt ist. Dieser Hydraulikzylinder ermöglicht ein Kippen der Grundplatte 12 relativ zu den Seitenplatten 14, 16 um die Kippachse 18. Dabei kann ein entsprechender zweiter Hydraulikzylinder an der Seitenplatte 14 vorgesehen sein.

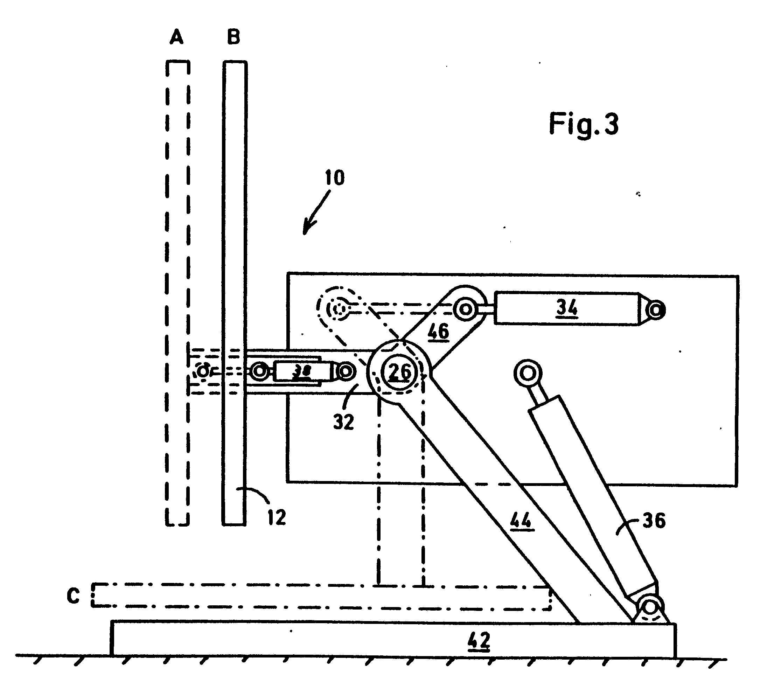

Figur 3 schließlich zeigt die Vorrichtung bei um 90° gekippten Seitenplatten 14, 16 und die Grundplatte 12 in den drei Positionen A, B und C. Dabei ist erkennbar, daß auf dem Arm 32 ein Hydraulikzylinder 38 aufgesetzt ist, der den teleskopartig ausgebildeten Arm derart strecken kann, daß die Grundplatte die mit B bezeichnete Stellung einnimmt, in der die Grundplatte gestrichelt dargestellt ist.

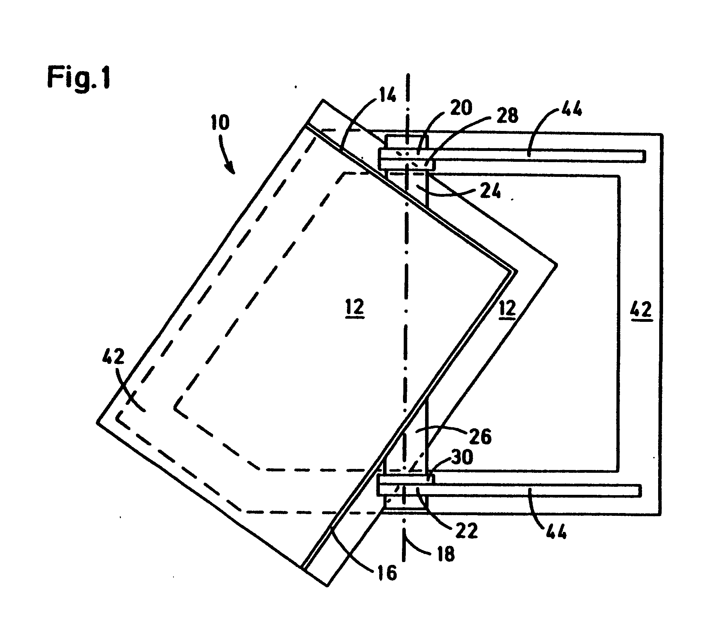

Zum Umpalettieren wird die Palette mit dem darauf befindlichen Gut auf die Grundplatte aufgebracht, die sich dabei in der in den Figuren 1 und 2 gezeigten Ausgangsstellung befindet. Dabei wird die Palette soweit aufgeschoben, bis das sich auf dieser befindliche Gut gegen die Seitenwände 14, 16 anstößt. Die Palette kann dabei unter Nutzung des Zwischenraumes zwischen den beiden Platten 14, 16 und der Grundplatte 12 über den von den Seitenplatten 14, 16 umschriebenen Raum hinausragen. Nach Absetzen der Palette auf der Grundplatte wird der Hydraulikzylinder bzw. werden die Hydraulikzylinder 36 betätigt, wodurch das Kippelement mit Grundplatte 12 und Seitenplatten 14, 16 um die Drehachse 18 in die in Figur 3 gezeigte Stellung kommen. Das auf der ersten Palette befindliche Gut liegt jetzt auf den Seitenwänden 14 und 16. Anschließend wird die Grundplatte 12 aus der in Figur 3 mit A bezeichneten Stellung durch Betätigung des Hydraulikzylinders 38 in die mit B bezeichnete Stellung gebracht. Jetzt kann die erste Palette nach oben oder aber schräg nach oben seitlich entfernt werden und die zweite Palette an deren Stelle gesetzt werden. In der Regel wird jedoch vor dem Abnehmen der ersten Palette von der Grundplatte und dem Aufsetzen der zweiten Palette auf die Grundplatte diese um die Drehachse 18 unter Betätigung des Hydraulikzylinders 34 in die mit C bezeichnete, strichpunktiert dargestellte Stellung gebracht. In dieser kann die alte Palette mittels eines Gabelstaplers o. dgl. entfernt und die zweite Palette auf dieselbe Weise auf die Grundplatte 12 aufgesetzt werden. Sodann wird die Grundplatte 12 mit der darauf befindlichen neuen Palette in die mit B bezeichnete Stellung gebracht und durch Betätigung des Hydraulikzylinders 38 in Richtung auf das zwischen den Seitenplatten 14, 16 liegende Gut in die mit A bezeichnete Stellung gebracht. Durch Betätigung des Hydraulikzylinders 36 kann das Kippelement mit Grundplatte 12 und Seitenplatten 14, 16 sodann wieder in die in den Figuren 1 und 2 gezeigte Ausgangsstellung gebracht und die zweite Palette mit dem darauf befindlichen Gut von der Grundplatte 12 abgezogen werden.

Es ist erkennbar geworden, daß mittels der dargestellten Vorrichtung auf einer Palette befindliches Gut schnell und schonend umpalettiert werden kann. Dabei ist natürlich zu berücksichtigen, daß die dargestelle Konstruktion lediglich beispielhaft ist und von dem Fachmann in verschiedenster anderer Ausgestaltung verwirklicht werden kann.

Weitere Verbesserungen der Vorrichtung können sich ergeben, wenn die Grundplatte 12 in ihrer Ebene auf einer Stützplatte beweglich gelagert wird. Für den Fall, daß die Palette nicht exakt aufgesetzt ist, wird diese sich bei dem Umkippen leicht in Richtung auf den Winkel zwischen den Seitenplatten 14, 16 verschieben und wäre ohne eine bewegliche Grundplatte hemmenden Scheerkräften ausgesetzt. Der Vermeidung derartiger Scheerkräfte dient weiter eine bewegliche Lagerung der Seitenplatten 14, 16 auf entsprechenden Stützplatten. Die Seitenplatten können weiter mit nachgiebigem Material belegt oder mit einem Luftkissen versehen sein, wodurch sich die Seitenwände an die Kontur des während des Palettenwechsels aufzunehmenden Gutes anpaßt. Diese Merkmale sind in den Figuren nicht gezeigt, um die Klarheit der Darstellung nicht zu beeinträchtigen.

Ebenfalls nicht gezeigt sind auf der Grundplatte 12 verschiebbar geführte Anschläge, die von der Außenkante der ersten Palette verschoben werden, bis das auf dieser liegende Gut gegen die Seitenwände 14, 16 stößt.

Diese Anschläge werden sodann verriegelt und dienen dazu, die zweite Palette exakt so aufzusetzen, wie die erste Palette auf der Grundplatte 12 aufsaß. Dies bewirkt, daß der Abstand zwischen der Außenkante der Palette und dem Gut erhalten bleibt.

Vorgesehen sein kann weiter eine - nicht gezeigte - Deckplatte, die an den Seitenwänden 14, 16 geführt und nach Aufbringen der ersen Palette auf das auf der Palette befindliche Gut abgesetzt wird und dies nach Kippen des Kippelements über die Horizontale hinaus neben den Seitenplatten abstützt. Bei Vorsehen einer Deckplatte kann also ein Gut auch dann umpalettiert werden, wenn das Gut bei vertikaler Ausrichtung der Bodenebene abfallen würde.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung in ihren verschiedenen Ausführungsformen wesentlich sein.

## Patentansprüche

1. Vorrichtung zum Umpalettieren von auf einer ersten Palette befindlichem Gut auf eine zweite Palette, mit einem mit einer in der Ausgangsstellung horizontal ausgerichteten Grundplatte (12) und einer in der Ausgangsstellung vertikal ausgerichteten ersten Seitenplatte (14) versehenen Kippelement (10), einem an der ersten Seitenplatte (14) angesetzten und in einem ersten Lager (20) drehbar geführten ersten Verbindungsmittel (24), Mitteln (36) zum Kippen des Kippelements (10) um eine im wesentlichen parallel zu der Ebene der Grundplatte verlaufende Kippachse (18) und Mitteln (34) zum Kippen der Grundplatte (12) relativ zu der Seitenplatte, dadurch gekennzeichnet, daß das Kippelement (10) eine zu der ersten Seitenplatte (14) rechtwinklig und in der Ausgangsstellung vertikal ausgerichtete zweite Seitenplatte (16) aufweist, und ein an der zweiten Seitenplatte (16) angesetztes, in einem zweiten Lager (22) drehbar geführtes und mit dem ersten Verbindungsmittel (24) die Kippachse definierendes zweites Verbindungsmittel (26) und außerhalb der Seitenplatten (14, 16) verlaufende, in Lagern (28, 30) um die die Seitenplatten (14, 16) durchstoßend verlaufende Kippachse (18) drehbar geführte, an die Grundplatte (12) angeschlagene Arme (32) vorgesehen sind.

2. Vorrichtung nach Anspruch 1, gekennzeichnet durch Mittel zum Bewegen der Grundplatte (12) relativ zu den Seitenplatten (14, 16) in einer zur Ebene der Grundplatte (12) senkrechten Richtung.

3. Vorrichtung nach Anspruch 1 oder 2, dadurch gekennzeichnet, daß die Mittel zum Kippen der Grundplatte (12) als an den Seitenplatten (14, 16) angelenkte, auf die Grundplatte (12) wirkende Hydraulikzylinder (34) ausgebildet sind.

4. Vorrichtung nach einem der vorangehenden Ansprüche, dadurch gekennzeichnet, daß die Mittel zum Kippen des Kippelements (10) als ein an einem festen Bezugspunkt angelenkter, auf die Seitenplatten (12, 14) wirkender Hydraulikzylinder (36) ausgebildet sind.

5. Vorrichtung nach Anspruch 2, dadurch gekennzeichnet, daß die Mittel zum Bewegen der Grundplatte (12) relativ zu den Seitenplatten (14, 16) als auf die teleskopartig ausgebildeten Arme (32) wirkender Hydraulikzylinder (38) ausgebildet sind.

6. Vorrichtung nach einem der vorangehenden Ansprüche, gekennzeichnet durch auf der Grundplatte (12) verschieb- und feststellbar geführte Anschläge.

7. Vorrichtung nach einem der vorangehenden Ansprüche, dadurch gekennzeichnet, daß die Grundplatte (12) in ihrer Ebene beweglich gelagert ist.

8. Vorrichtung nach einem der vorangehenden Ansprüche, dadurch gekennzeichnet, daß wenigstens eine der Seitenplatten (14, 16) in ihrer Ebene beweglich gelagert ist.

9. Vorrichtung nach Anspruch 7 oder 8, gekennzeichnet durch Mittel, die die Beweglichkeit der Grund- bzw. Seitenplatte(n) (12, 14, 16) aus einer Ausgangsstellung erst nach Aufbringen der Palette auf die Grundplatte (12) freigeben.

10. Vorrichtung nach einem der vorangehenden Ansprüche, dadurch gekennzeichnet, daß wenigstens eine der Seitenplatten (14, 16) mit einem nachgiebigen Material belegt ist.

11. Vorrichtung nach einem der vorangehenden Ansprüche, gekennzeichnet durch eine sich zu der Grundplatte (12) erstreckende, relativ zu dieser verschiebbare Deckplatte.

## Claims

1. Apparatus for transferring a load from a first pallet to a second pallet, with a base plate (12) which is horizontally positioned in the initial position and a tilt element (10) containing a first side plate (14) which is vertically extended in the initial position, a first linkage means (20) being attached at the first side plate (14) and pivoted in a first bearing (24), means for tilting the tilt element (14) about a tilt axis (18) being substantially parallel to the plane of the base plate (12) and means for tilting the platform (12) relative to the first side plate (14), characterized in that the tilt element (10) has a second side plate (16) which is positioned in a right angle to the first side plate (16) and which is vertically positioned in the initial position, a second linkage means being attached to the second side plate (16) being pivoted in a second bearing (22) and defining, together with the first linkage means (24), the tilt axis, and arms (32) running outside the side plates (14, 16) and beiing pivoted in bearings (28, 30) about the tilt axis (18) which penetrates the side plates (14, 16).

2. Apparatus according to claim 1, characterized by means for moving the base plate (12) relative to the side plates (14, 16) in a plane orthogonal to the base plate (12).

3. Apparatus according to claim 1 or 2, characterized in that the means for tilting the base plate (12) are formed as hydraulic cylinders (34) being pivoted at the side plates (14, 16) and acting on the bas plate (12).

4. Apparatus according to one of the preceding claims, characterized in that the means for tilting the side plates (14, 16) is formed as a hydraulic cylinder (36) acting on the side plates (14, 16) and being pivoted at a fixed reference point.

5. Apparatus according to claims 2, characterized in that the means for moving the base plate (12) is formed as a hydraulic cylinder (38) acting on telescope arms (32).

6. Apparatus according to one of the preceding claims, characterized by stops, shiftable along and fixable onnto the base plate.

7. Apparatus according to one of the preceding claims, characterized in that the base plate (12) is held movable in its plane.

8. Apparatus according to one of the preceding claims, characterized in that at least one of the side plates (14, 16) is held movable in its plane.

9. Apparatus according to claim 7 or 8, characterized by means which allow the base plate (12) and the side plate (14, 16) to move from an initial position only after putting the palett on the base plate (12).

10. Apparatus according to one of the preceding claims, characterized in that at least one of the side plates (14, 16) is covered by a soft material.

11. Apparatus according to one or more of the preceding claims, characterized in a cover plate running parallel to and shiftable relative to the base plate (12) and shiftable relativ to the base plate (12).

## Revendications

1. Dispositif pour changer de palette une marchandise se trouvant sur une première palette sur une deuxième, pourvu d'un élément basculant (10), équipé d'un socle (12) à l'horizontale en position initiale et d'une première plaque latérale (14) à la verticale en position initiale, d'un premier élément de jonction (24) guidable de manière tournante dans un premier support (20) et rattaché à la première plaque latérale (14), de moyens (36) servant à renverser l'élément basculant (10) autour d'un axe basculant (18) suivant en gros parallèlement la surface de la plaque de base (12), de moyens (34) servant à renverser la plaque de base (12) relativement à la plaque latérale, dispositif caractérisé par ceci que l'élément basculant (10) présente une deuxième plaque latérale (16) rectangulaire et en position initiale verticale à la première plaque latérale ainsi qu'un deuxième élément de jonction (26) définissant avec le premier élément de jonction (24) l'axe basculant et fixé à la deuxième plaque latérale (16) et guidable de manière tournante à un deuxième palier (22), des bras cloués (32) à la plaque de base (12) sont prévus suivants en-dehors des plaques latérales (14, 16), en paliers (28, 30) autour desquels l'axe vertical suivant (18) guidable de manière tournante passe par des plaques latérales (14, 16).

2. Dispositif selon la revendication 1 caractérisé par un dispositif permettant de bouger la plaque de base (12) relatif aux plaques latérales (14, 16) dans une direction perpendiculaire par rapport au plan de la plaque de base (12).

3. Dispositif selon la revendication 1 ou 2, caractérisé par ceci que les dispositifs servant à basculer la plaque de base (12) soient concus comme des cylindres hydrauliques (34) agissant sur la plaque de base (12) dirigés sur les plaques latérales (14, 16).

4. Dispositif selon l'une des revendications précédentes, caractérisé par ceci que les dispositifs servant à basculer l'élément basculant (10) soient concus comme un cylindre hydraulique (36) agissant sur les plaques latérales (12, 14) et articulé à partir d'un point de référence fixé.

5. Dispositif selon la revendication 2, caractérisé par ceci que les dispositifs servant à bouger la plaque de base (12) soient concus relativement aux plaques latérales (14, 16) comme un cylindre hydraulique (38) agissant sur les bras concus de manière télescopique.

6. Dispositif selon l'une des revendications précédentes caractérisé par des chiens d'arrêt guidés de manière déplacable et blocables sur la plaque de base (12).

7. Dispositif selon l'une des revendications précédentes caractérisé par ceci que la plaque de base (12) soit construite de telle sorte qu'elle puisse bouger sur son plan.

8. Dispositif selon l'une des revendications précédentes caractérisé par ceci qu'au moins une des plaques latérales soit construite de manière à être bougé sur sa plaine.

9. Dispositif selon la revendication 7 ou 8 caractérisé par des dispositifs qui permettent le mouvement de la plaque de base ou bien des plaques latérales (12, 14, 16) à partir d'une position initiale seulement après la mise de la palette sur la plaque de base (12).

10. Dispositif selon l'une des revendications précédentes caractérisé par ceci qu'au moins une des plaques latérales (14, 16) soit couverte d'un matériel souple.

11. Dispositif selon l'une des revendications précédentes caractérisé par une plaque de recouvrement s'étendant sur une plaque de base (12) relativement déplacable à celle-ci.

**Fig.1**

EP 0 191 807 B1

Fig.2

Fig.3